# EUROPEAN PATENT SPECIFICATION

(11) **EP 2 116 620 B1**
(45) Date of publication and mention of the grant of the patent: **07.11.2012**
(21) Application number: 08711178.7
(22) Date of filing: 13.02.2008
(51) Int. Cl.: C22C 9/00, B22F 5/00, C22C 1/04, C22C 9/02, C22C 9/06, F16C 33/10, F16C 33/12

(54) **LEAD-FREE COPPER-BASED SINTER SLIDING MATERIAL**
BLEIFREIES SINTERGLEITMATERIAL AUF KUPFERBASIS
MATÉRIAU FRITTÉ GLISSANT À BASE DE CUIVRE ET SANS PLOMB

(30) Priority: 14.02.2007 JP 2007032896
(43) Date of publication of application: 11.11.2009
(73) Proprietor: Taiho Kogyo Co., Ltd, Toyota-shi Aichi 471-8502 (JP)
(72) Inventor: YOSHITOME, Daisuke, Toyota-shi Aichi 471-8502 (JP); TOMIKAWA, Takashi, Toyota-shi Aichi 471-8502 (JP); WADA, Hitoshi, Toyota-shi Aichi 471-8502 (JP)
(74) Representative: Kador & Partner
(86) International application number: PCT/JP2008/052320
(87) International publication number: WO 2008/099840

(56) References cited:
- WO-A2-2005/033353
- JP-A- 04 028 802
- JP-A- 07 179 964
- JP-A- 10 330 868

## Description

### Technical Field

The present invention relates to a copper-based sliding material, more particularly, to a copper-based sliding material having improved sliding properties notwithstanding inclusion of Pb.

### Background Technique

Sliding material is required to support a load. In the case of copper alloy, this function is performed by Cu. Meanwhile, Pb is usually added to a copper alloy. Such Pb is present on the sliding surface of copper alloy elongates due to rise in temperature during sliding. Pb exhibits excellent self lubricating property and plays a role of solid lubricant to prevent seizure. In addition, since Pb forms a soft dispersion phase, it has conformability and allows solid matter to be embedded therein. However, Pb is of great concern because of its harmful effect to the human body and environment. In addition, Pb is liable to be corroded by acid except sulfuric acid. Coarse lead particles present in Cu alloy lower the load resistance of a bearing. Therefore, Patent Document 1 (Japanese Examined Patent Publication (kokoku) Hei 8-19945) proposes a specific calculation equation, which determines distribution of fine particles. This equation is obtained by counting total Pb particles in a view field of 0.1 mm² (10⁵ µm²), and calculating their area in percentage. The obtained value is processed to % average area per particle, which should be 0.1% or less.

It is known from Patent Document 2 (Japanese Examined Patent Publication (kokoku) No. 7-9046) that such carbide hard-particle additives as Cr₂C₃, Mo₂C, WC, VC, and NbC in sintered copper alloy enhance its wear resistance. According to this publication, a copper-alloy powder having an average particle diameter of 10 to 100 µm and a hard-particle powder having an average particle-diameter of 5 to 150 µm are mixed with a V-type blender, and then compacted and sintered. It discloses that Pb is present in the grain boundaries of copper particles (column 4, lines 21-22). This finding is in agreement with a knowledge derived from a phase diagram showing the fact that Pb is virtually not dissolved in solid Cu.

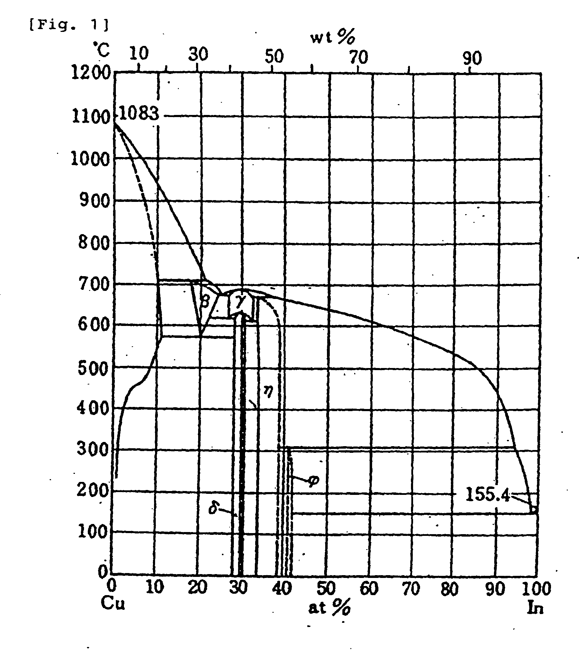

It is known from Patent Document 3 (Japanese Unexamined Patent Publication (kokai) No. 10-330868) that a Pb-free Cu-Bi based alloy attains sliding properties equivalent to those of a Cu-Pb based sintered alloy. In the former alloy, a Bi (alloy) phase is present in the three-pronged junctions and their vicinities in the grain boundaries. Patent Document 3 discloses 5 to 50 mass% of Bi phase consisting of Bi or Bi-based alloy. The Bi phase contains at least element of Sn, Ag, or In, in particular, 20% by weight or less Sn, 10% by weight or less Ag, and 5% by weight or less In. According to an exemplary manufacturing method, a pure Bi powder or Bi powder containing at least one of Sn, Ag, and Bi is mixed with any one of pure Cu powder, bronze powder, and phosphor bronze powder, and the resulting mixture is compressed and sintered. Sintering conditions include 800 degrees C for 1 hour. According to the description of Patent Document 3, In is included in the Bi phase as is described above. In addition, In effectively enhances adherence of Cu phase with Bi phase, because In lowers the melting point of Cu. Also Sn lowers the melting point of Cu. A phase diagram shown in Fig. 1 teaches that a Cu-In liquidus falls steeply in a range of 0 to 20 mass% In. This teaching of phase is believed to be utilized to effectively enhance adherence.

Patent Document 4 (Japanese Patent No. 3421724) proposes that: hard particles co-present in the Pb or Bi phase of a sintered copper-alloy prevent Pb and Bi from flowing; the hard particles are placed on a cushion formed of the Pb and Bi phase and they attack an opposite shaft in only reduced amounts; and, the once separated hard particles are recaptured by the Pb or Bi phase. Abrasive wear is therefore mitigated.

Patent Document 5 (Japanese Unexamined Patent Publication No. 2001-220630) discloses that the following structure improves seizure resistance and fatigue resistance of a Cu-Bi (Pb) based sintered sliding material. The wear-resistant intermetallic compound additives present in the peripheries of Bi or Pb phase form convex portions on the surface of copper alloy, while the Bi or Pb phase or Cu matrix form concave portions to form an oil reservoir during sliding. An example of sintering conditions includes 800-920 degrees C for approximately 15 minutes.

Patent Document 6 (Japanese Patent No. 3108363) discloses addition of indium (In) to copper alloy for use as a plain bearing. In this method, corrosion resistance of a Cu-Sn-Pb alloy is improved by In diffusion from an In-based overlay to the Cu-Pb-Sn layer.
Patent Document 1: Japanese Examined Patent Publication No. Hei 8-11945
Patent Document 2: Japanese Examined Patent Publication No. Hei 7-9046
Patent Document 3: Japanese Unexamined Patent Publication No. Hei 10-330868
Patent Document 4: Japanese Patent No. 3421724
Patent Document 5: Japanese Unexamined Patent Publication 2001-220630
Patent Document 6: Japanese Patent No._3108363
Non Patent Document No. 1: FRICTION AND MATERIALS, Second Edition (1995), ERNEST RABINOWICZ, John Wiley & Sons. Inc. pages 32, 38.

### Disclosure of Invention

### Problems to be Solved by Invention

In a Cu alloy containing Pb or Bi, they are virtually undissolved in the Cu matrix, or they form intermetallic compound. Therefore, Pb and Bi form a minority phase distinguished from and dispersed in the Cu matrix. Since Bi is softer than Cu, Bi exhibits conformability. However, since Bi is harder than Pb, the conformability and also the seizure resistance of Bi are inferior to those of Pb. In addition, since the adhesion resistance of Cu-Bi based or Cu-Sn-Bi based alloy is lower than that of Cu-Sn-Pb based alloy, and also since conformability of the former alloy is low, when Bi of the former alloy adheres onto an opposite shaft, seizure of the former alloy is likely to occur as compared with the case of the latter Cu-Sn-Pb based alloy.
In is alloyed in the Bi phase of the Cu-Sn-Bi-In based copper alloy proposed in Patent Document 3. The In-alloyed Bi phase has a considerably low melting point and therefore the sliding properties deteriorate.

### Means for Solving the Problems

The present invention aims to improve seizure resistance of a Cu-Bi based sintered alloy sliding material and to obtain a novel function of In. For this purpose, a Pb-free copper-based sintered sliding material provided by the present invention contains 0.5 to 15.0 mass% Bi and 0.3 to 15.0 mass% In, with the balance being Cu and inevitable impurities, and is characterized by the existence of Cu, Bi, and In in the material as follows, namely, a Cu matrix containing In, a Bi phase, and an In concentrated region in said Cu matrix at a boundary of said Bi phase.
The present invention is described in detail herein below.

### (1) Alloy Composition

In the Cu-Bi-In based sintered alloy according to the present invention, when the Bi content is less than 0.5%, seizure resistance is poor, and the amount of In concentrated layer is very small. On the other hand, when the Bi content is more than 15.0%, strength lowers and concentration of In occurs with difficulty. A lining buckles and seizure occurs during operation under high load. Bi content is therefore 0.5 to 15.0%. A preferable Bi content is 1.0 to 8.0%. The content referred to in the present section of "Alloy Composition" is based on mass%. Hard particles and a solid lubricant may be added in the copper based sintered sliding material described hereinbelow. These additives are not considered part of the composition of the copper alloy, as long as the alloy composition is concerned.

When the In content is less than 0.3%, although In concentrated regions may be formed, they are only slightly effective. On the other hand, when the In content is more than 15%, concentration of In occurs with difficulty, and seizure occurs. The In content is therefore 0.3 to 15.0%. A preferable In content is 0.5 to 6.0%.
In addition, 0.5 to 6.0% of Sn can be added to enhance load resistance. When the Sn content is less than 0.5%, Sn is only slightly effective in enhancing the strength. On the other hand, when the Sn content is more than 15.0%, intermetallic compounds are liable to form, thereby embrittling the alloy. However, the total content of In+Sn must be in a range of 1.0 to 15.0%. The balance of the above mentioned components is inevitable impurities and Cu. The impurities are usual ones. Among them, Pb at an impurity level is included.

If necessary, the following additive elements are added to the copper-based sliding material according to the present invention. For example, 0.5% or less of P can be added to lower melting temperature of Cu and hence improve sinterability. When the P content exceeds 0.5%, the copper alloy embrittles. In the P-added composition, a forming temperature of a Cu-P liquid phase is higher than a forming temperature of a Bi liquid phase. This means that when sintering is carried out under the presence of a Cu-P liquid phase, Bi remains in a molten state. Formation temperature of the Bi phase is believed to be lower than the liquid-phase sintering temperature.
From 0.1 to 5.0% of Ni can be added to enhance strength and corrosion resistance. When the Ni content is less than 0.1%, Ni is only slightly effective for enhancing strength. On the other hand, when the Ni content exceeds 5.0%, an intermetallic compound is liable to form and the alloy embrittles. Ni is uniformly dissolved in a solid Cu alloy.

Hard particles as proposed in Patent Document No. 2, and such Fe-based compound hard-particles as Fe₂P, Fe₃P, FeB, Fe₂B, and Fe₃B having improved sinterability with Cu alloy, can be added in the present invention. The content of hard particles described in the present paragraph is based on the entire copper-based sintered sliding material. Meanwhile, the content of Bi, In, or the like is based on the material excepting the hard particles. When the content of hard particles is less than 0.1%, seizure resistance and wear resistance are poor. On the other hand, when the content of hard particles exceeds 10.0%, the hard particles impair the fatigue resistance and damage an opposite material and lower sinterability. A preferable content of the hard particles is 1.0 to 5.0%.
Solid lubricant, such as MoS₂, graphite, and the like can be added in an amount of 5.0% or less to copper alloy as a composite component.

### (2) Properties of Alloy

The conformability and low adhesion property of copper-based sintered sliding material according to the present invention are obtained from the Bi phase and In-concentrated regions in the copper matrix, respectively.
(a) Physical properties of a material are said to be employable as an alternative index of sliding properties. The adhesion property of material can be related to such affinity to opposite material, usually Fe, that said material and opposite material have compatibility to form an alloy. Consideration is made based on the data shown in pages 32 and 38 of Non-Patent Document 1, FRICTION AND WEAR OF MATERIALS, second Edition, ERNEST RABINOWICSZ, John Wiley & Sons. Cu and Fe are a combination of material relatively easy to form an alloy. However, since In and Fe are incompatible, In is concentrated in the Cu matrix and presumably acts negatively on the characteristics of Cu, lowering adhesivity of Cu. Bi is also difficult to form an alloy of Fe according to the equilibrium phase diagram of metal. Bi is presumably incompatible and seems to have low adhesivity.
(b) Conformability can be evaluated by hardness of bulk material. That is, the higher the hardness, the better is the conformability. Although hardness of Bi is not as low as Pb, Bi exhibits conformability. Bi and Pb do not form an intermetallic compound with Cu. Bi is not dissolved in solid Cu. Bi therefore forms a minority phase.

### (3) Alloy Structure

Structure of the Cu-Bi-In based sintered alloy according to the present invention is formed of Cu, Bi, and In as follows. Sn, In, and the like are contained in the Cu matrix as solutes. Intermetallic compounds such as Cu-Sn, Cu-In, and the like are precipitated in the Cu matrix. The Cu matrix is therefore distinguished from a Bi phase. Bi is present in the boundaries of Cu crystal grains.

First of all, Cu and Bi are separated from each other in the Cu-Bi binary system.

Bi has no solubility in Cu, while In shows solubility in Cu. The solubility of In decreases at lower temperature but remains appreciable even at room temperature (25°C). At a sintering temperature of Cu-Bi-In based alloy powder, the solute In in the Cu matrix diffuses to the Bi liquid phase, which is then converted to a Bi-In liquid phase. The liquid phase and the Cu solid phase are present in mixture. Sintering is carried out under the condition of mixed phases, i.e., a Cu solid phase, and a liquid phase, i.e., a Bi+In liquid phase. When P is added, sintering proceeds under the condition of mixed solid and liquid phases. That is, the solid phase is Cu-P solid phase, and the liquid phase is Bi+In liquid phase.

In Patent Document 3, the post sintering structure is a mixed Bi and In structure. The structure according to the present invention is as follows. The In phase and Bi phase are separated from each other, In concentration is high around the Bi phase, and an element other than Bi is not detected in the Bi phase. Solubility of In in Cu at low temperature is utilized for the following re-diffusion. That is, In in the liquid phase again diffuses from the Bi phase to the Cu matrix during cooling after sintering. Thus, In concentrated regions are formed. On the other hand, when diffusion is carried out for a long period of time, In is uniformly dispersed in the Cu matrix and hence no concentrated region is formed.

The above structures can be distinguished from each other, with an EPMA, which detects X-ray intensities of the respective elements. The detected X-ray intensities are converted to color mapping. When one pays attention to color indications, the granular Cu matrix structure and the Bi-phase boundary structure are distinguished from each other. Likewise, the In concentration is detected with an EPMA, and, regions corresponding to different In concentrations are obtained. There is a region in the Cu matrix at a boundary of Cu matrix/Bi phase, which region is distinguishable from another region by color. In the present invention, an EPMA (product of Nihon Denshi Co. Ltd., type-JXA-8100) was used, and X-ray detection and color mapping were carried out at an accelerating voltage of 20kV and a current value of 3×10⁻⁸ A.

The sintering process as described above is achieved under the following preferable sintering conditions: holding at 750 degrees C to 950 degrees C for 20s or longer; and cooling down to the melting point (270 degrees C) at a cooling speed of essentially 5 degrees C/sec or more. Namely, when the holding time at sintering is excessively short, diffusion time of solute In from Cu matrix to the Bi liquid phase is not satisfactory long so that In concentrated regions are formed with difficulty. When the cooling speed is too high, the diffusion time of In from the Bi+In liquid phase to the Cu matrix is so short that the In concentrated regions are formed with difficulty, as well. On the other hand, when the cooling speed is too slow, re-diffusion is promoted to such a level that In is uniformly dispersed in the Cu matrix and hence the concentrated regions are failed to be formed, as well.

Sn and Ni are optional elements described hereinabove and are mainly dissolved in the Cu matrix. P forms a Cu-P based minority phase when added in a large amount. The present invention is hereinafter described in detail by way of examples.

### Best Modes for Carrying Out Invention

### Example 1

Cu-Bi-In-Sn based, Cu-Bi-In based, or Cu-Bi based pre alloy powder (particle diameter-150µm, atomized powder) is sprayed onto a steel sheet to provide an approximately 1mm thick layer having a composition showing in Table 1. Primary sintering was carried out at 750-950 degrees C for 200 seconds of sintering time in a hydrogen-reducing atmosphere. Cooling speed was 20 degrees c/s. Subsequently, rolling was carried out, and then a secondary sintering was carried out under the identical conditions. The resultant sintered compacts were used as test samples. However, in Comparative Examples 1-7 the holding time at sintering was 15 seconds and the other conditions were the same as in the Examples.

### Testing Method of Seizure Resistance

A bush journal type tester was used for a seizure test. Test samples were worked in a bush form 22 mm in diameter and 10 mm in length. A test was carried out under the following conditions.
Opposite Material: SCM415H(HV 720-850, Rz 0.8-1.0)
Loading step: 3 MPa/5 minute
Revolution number: 3000 rpm
Oil grade: additive-free paraffin oil
Oil temperature: 80 degrees C
When the temperature of the back surface of a bush elevated to 160 degrees C or higher, judgment of seizure was rendered.

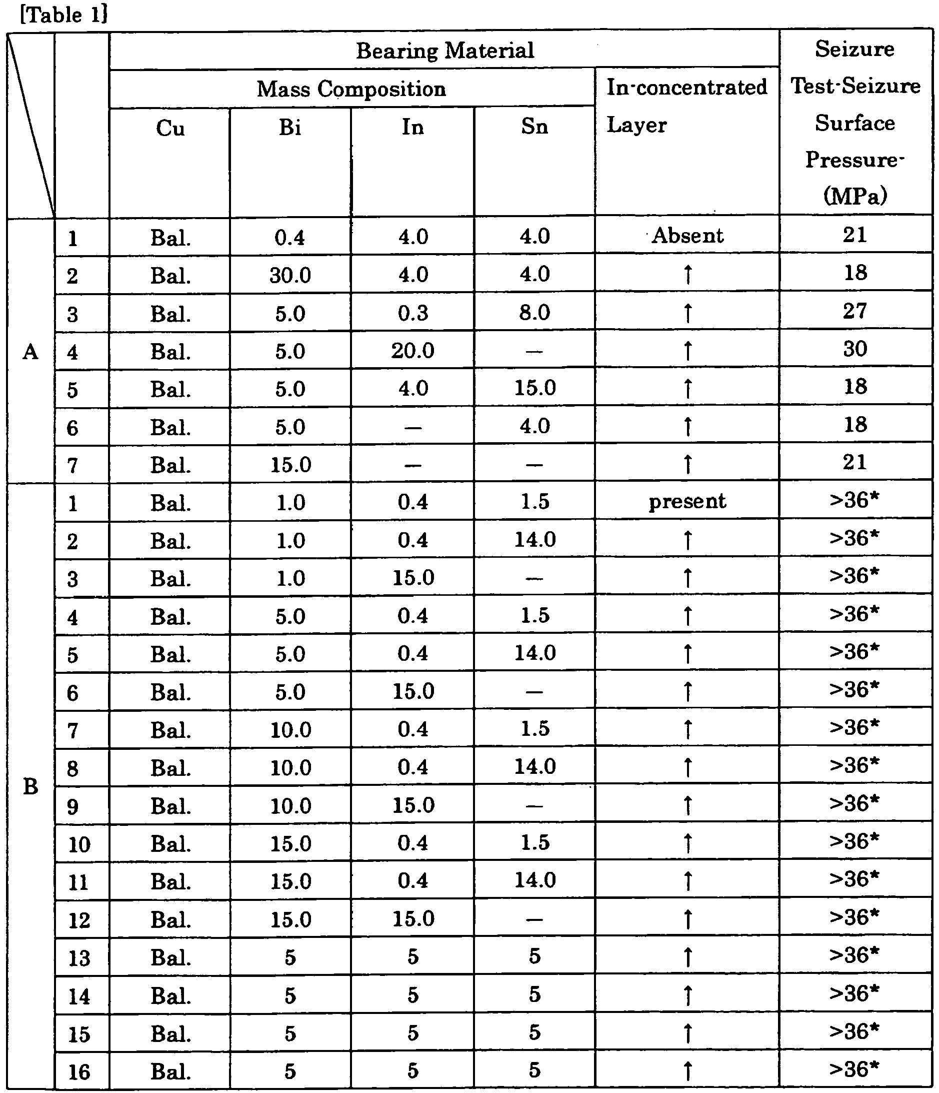

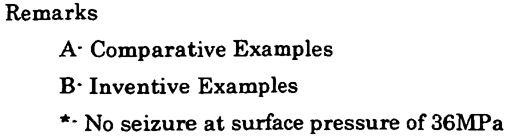

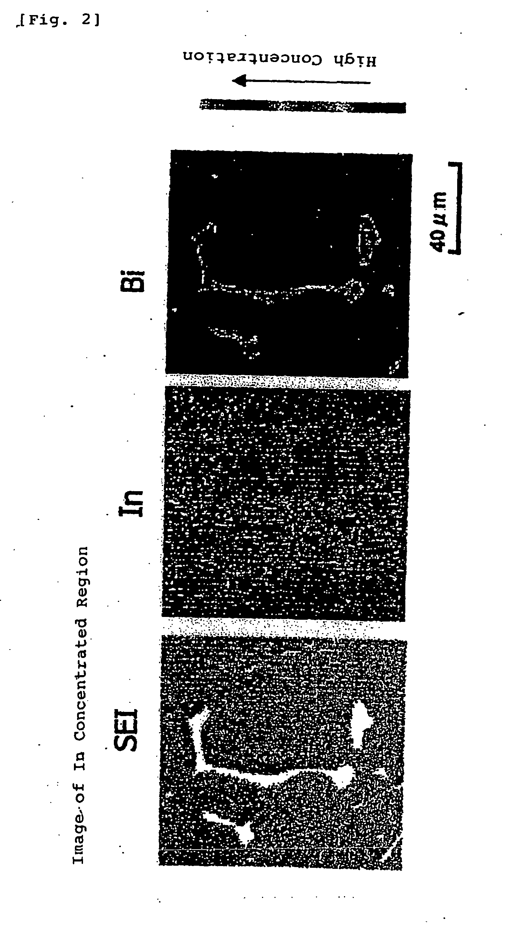

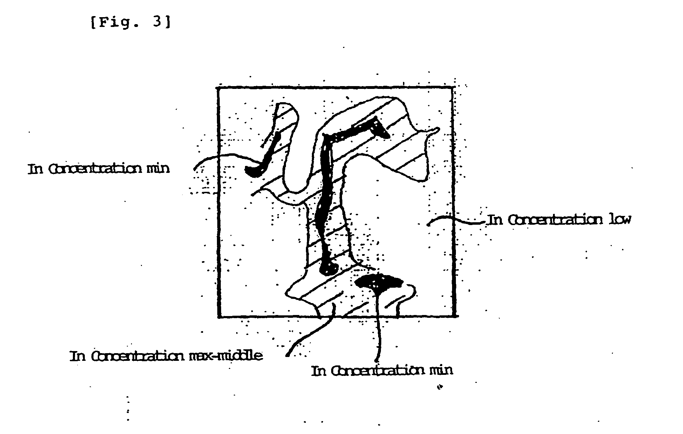

In Table 1, the seizure resistance of any of Comparative Examples 1-7 is poor because of the following reasons. (a) No. 1-low Bi content, (b) No. 2-high Bi content, (c) No. 3-low In content, (d) No. 4-high In content, (e) No. 5-high Sn+In content, (f) No. 6,7-no In addition. In contrast, the inventive examples reveal improved seizure resistance. Fig.2 shows an EPMA chart of test sample No. 14. Fig.3 illustrates information obtained from color mapping of In concentration shown in Fig.2. The following facts are clear from Fig. 3.
- The "In concentration min region" is blue colored and has a lowest In concentration. This region coincides with the region where the Bi concentration is highest (red or pink).
- The "In concentration low region" is green colored and the Bi concentration is black (not detected).
- The "In concentration max-middle region" shown in Fig. 3 is a region where green, yellow, and red concentrations are mixed, and represents an In concentrated region. This region is present at the boundary of a Bi phase. Therefore, In is present in the Cu matrix and concentrated at the boundary of a Bi phase.

### Example 2

Ni, Cu was added to the copper alloy powder used in Example 1 and sintered. Hard matter and solid lubricant were added to hundred percentage of the copper alloy powder used in Example 1 , and were sintered. The respective compositions are shown in Table 2. Example product Nos. 18, 20, 22, and 24 exhibited improved property over the Comparative Examples of Table 1. The Ni concentration was uniform in the matrix.

P was also dispersed uniformly in the matrix.

**[Table 2]**

| No. | Bearing Material | | | | | | | | | Seizure Test-Seizure Surface Pressure⁻(MPa) |
|---|---|---|---|---|---|---|---|---|---|---|
| | Mass Composition (hundred %) | | | | | | | | In concentrated region | |
| | Cu | Bi | In | Sn | P | Ni | Fe₃P | graphite | | |
| 17 | Bal. | 5 | 5 | 5 | 0.5 | - | - | - | present | >36 |
| 18 | Bal. | 5 | 5 | 5 | 0.1 | - | - | - | ↑ | >36 |
| 19 | Bal. | 5 | 5 | 5 | - | 5 | - | - | ↑ | >36 |
| 20 | Bal. | 5 | 5 | 5 | - | 0.1 | - | - | ↑ | >36 |
| 21 | Bal. | 5 | 5 | 5 | - | - | 10 | - | ↑ | >36 |
| 22 | Bal. | 5 | 5 | 5 | - | - | 0.1 | - | ↑ | >36 |
| 23 | Bal. | 5 | 5 | 5 | - | - | - | 5 | ↑ | >36 |
| 24 | Bal. | 5 | 5 | 5 | - | - | - | 0.1 | ↑ | >36 |

### Industrial Applicability

The sintered copper alloy according to the present invention can be used for various sliding members, such as an AT (automatic transmission) bush, bearings of a connecting rod, and a sliding material of a compressor. High-level seizure resistance attained by the present invention is effectively exhibited in these applications.

### Brief Description of Drawings

[Fig. 1] a Cu-In binary phase diagram
[Fig. 2] an EPMA chart showing an In concentrated region
[Fig. 3] an illustrative drawing of Fig. 2

## Claims

1. A Pb-free copper based sintered sliding material containing 0.5 to 15.0 mass% Bi and 0.3 to 15.0 mass% In, with the balance being Cu and inevitable impurities, optionally containing 0.5 to 15.0 mass% Sn, and the total content of In + Sn is 1.0 to 15.0 mass%, and further optionally containing 0.5 mass% or less P and 0.1 to 5.0 mass% Ni, **characterized by** the existence of Cu, Bi, and In in the material as follows, namely, a Cu matrix containing In, a Bi phase, and an In concentrated region in said Cu matrix at a boundary of said Bi phase.

2. A Pb-free copper-based sintered sliding material according to claim 1 , **characterized in that** hard particles of an iron-based-compound, such as Fe₂P, Fe₃P, FeB, Fe₂B, and Fe₃B, is contained in an amount of 0.1 to 10.0 mass% relative to 100 mass% of said iron-based sintered sliding material.

3. A Pb-free copper-based sintered sliding material according to any one of claims 1 through 2, **characterized in that** a solid lubricant is contained in an amount of 5.0 mass% or less relative to 100 mass% of said iron-base sintered sliding material.

## Patentansprüche

1. Pb-freies, auf Kupfer basierendes, gesintertes Gleitmaterial, das 0,5 bis 15,0 Gew.-% Bi und 0,3 bis 15,0 Gew.-% In enthält, wobei der Rest Cu und unvermeidliche Verunreinigungen ist, das gegebenenfalls 0,5 bis 15,0 Gew.-% Sn enthält, und wobei der Gesamtgehalt an In + Sn 1,0 bis 15,0 Gew.-% beträgt, und das ferner gegebenenfalls 0,5 Gew.-% oder weniger P und 0,1 bis 5,0 Gew.-% Ni enthält,
**gekennzeichnet durch** das Vorhandensein von Cu, Bi und In im Material wie folgt: und zwar eine Cu-Matrix, die In enthält, eine Bi-Phase, und einen mit In angereicherten Bereich in der Cu-Matrix an der Grenze zur Bi-Phase.

2. Pb-freies, auf Kupfer basierendes, gesintertes Gleitmaterial nach Anspruch 1, **dadurch gekennzeichnet, daß** harte Partikel einer auf Eisen basierenden Verbindung, wie Fe₂P, Fe₃P, FeB, Fe₂B und Fe₃B, in einer Menge von 0,1 bis 10,0 Gew.-% enthalten sind, und zwar auf 100 Gew.-% des auf Eisen basierenden, gesinterten Gleitmaterials bezogen.

3. Pb-freies, auf Kupfer basierendes, gesintertes Gleitmaterial nach einem der Ansprüche 1 bis 2, **dadurch gekennzeichnet, daß** ein festes Gleitmittel in einer Menge von 5,0 Gew.-% oder weniger enthalten ist, und zwar auf 100 Gew.-% des auf Eisen basierenden, gesinterten Gleitmaterials bezogen.

## Revendications

1. Matériau de glissement fritté à base de cuivre et exempt de Pb, contenant 0,5 à 15,0 % en masse de Bi et 0,3 à 15,0 % en masse d'In, le reste étant du Cu et des impuretés inévitables, contenant éventuellement 0,5 à 15,0 % en masse de SN, la teneur totale en In + Sn étant de 1,0 à 15,0 % en masse, et contenant en outre éventuellement 0,5 % en masse ou moins de P et 0,1 à 5,0 % en masse de Ni, **caractérisé par** l'existence de Cu, de Bi et d'In dans le matériau comme suit, à savoir une matrice de Cu contenant de l'In, une phase de Bi, et une région concentrée en In dans ladite matrice de Cu à une limite de ladite phase de Bi.

2. Matériau de glissement fritté à base de cuivre et exempt de Pb selon la revendication 1, **caractérisé en ce que** des particules dures d'un composé à base de fer, tel que Fe₂P, Fe₃P, FeB, Fe₂B et Fe₃B, sont présentes en une quantité de 0,1 à 10,0 % en masse pour 100 % en masse dudit matériau de glissement fritté à base de fer.

3. Matériau de glissement fritté à base de cuivre et exempt de Pb selon l'une quelconque des revendications 1 à 2, **caractérisé en ce qu'**un lubrifiant solide est présent en une quantité de 5,0 % en masse ou moins pour 100 % en masse dudit matériau de glissement fritté à base de fer.
